(19) **Europäisches Patentamt / European Patent Office / Office européen des brevets**

(11) **EP 2 655 914 B1**

(12) **EUROPEAN PATENT SPECIFICATION**

(45) Date of publication and mention
of the grant of the patent:
**24.09.2014 Bulletin 2014/39**

(51) Int Cl.:
***F16D 48/06*** (2006.01)

(21) Application number: **10805199.6**

(22) Date of filing: **20.12.2010**

(86) International application number:
**PCT/EP2010/007788**

(87) International publication number:
**WO 2012/083976 (28.06.2012 Gazette 2012/26)**

(54) **METHOD AND SYSTEM FOR CALIBRATING AN ESTIMATED CLUTCH CHARACTERISTIC CURVE**

VERFAHREN UND SYSTEM ZUR KALIBRIERUNG EINER GESCHÄTZTEN KUPPLUNGSKENNLINIE

PROCÉDÉ ET SYSTÈME POUR ÉTALONNER UNE COURBE CARACTÉRISTIQUE D'EMBRAYAGE ESTIMÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.10.2013 Bulletin 2013/44**

(73) Proprietor: **Volvo Lastvagnar AB
405 08 Göteborg (SE)**

(72) Inventors:
• **KARPENMAN, Fredrik
S-421 47 Västra Frölunda (SE)**
• **RAZAZNEJAD, Behrooz
S-413 05 Göteborg (SE)**

• **RYBERG, Henrik
S-417 26 Göteborg (SE)**
• **AHO, Sami
SE-421 48 Västra Frölunda (SE)**
• **SJÖQVIST, Fredrik
SE-423 52 Torslanda (SE)**

(74) Representative: **Jönrup, Emil et al
Volvo Technology Corporation
Corporate IP
Dept 06820, M1.7
40508 Göteborg (SE)**

(56) References cited:
**WO-A1-2009/065458    DE-A1- 10 261 723
US-A- 4 678 069    US-A1- 2009 000 901**

**Description**

TECHNICAL FIELD

The present invention relates to a method and system for calibrating an estimated clutch characteristic curve of a dual-clutch assembly of a transmission for a motor vehicle, wherein said transmission comprising a dual-clutch assembly with a first friction clutch, a first clutch regulator, a second friction clutch, and a second clutch regulator, each of said friction clutches being drivingly connected to a prime mover by means of a clutch input shaft, a first input shaft connected to said first friction clutch, a second input shaft connected to said second friction clutch, at least one countershaft arranged parallel with at least one of said first and second input shafts, gearwheels, tooth clutches, and a transmission output shaft, whereby selective engagement of said first and second frictional clutches and tooth clutches, different speed ratios between said clutch input shaft and said transmission output shaft can be established.

BACKGROUND ART

In principle, a dual clutch transmission has two input shafts, each connected to a friction clutch and to the output of an engine. Functionally, this is equivalent to having two conventional transmissions in parallel, that is two parallel sub-transmissions, and using one at a time for power transfer. The sub-transmission that is not used, thus idling for the time being, can have a gear engaged and prepared for a subsequent shift. This shift is carried out by simultaneously disengaging the friction clutch of the previously used sub-transmission and engaging the friction clutch of the previously idling sub-transmission.

In order to guarantee comfortable and low-wear operation of an automatic dual-clutch assembly, an exact as possible estimation of a relation between a regulating parameter of an associated clutch regulator and a torque transmission capability of the friction clutch is required. That applies in particular for the two friction clutches of a dual-clutch transmission in which at least one clutch is used as a start-up clutch and both clutches can alternately be engaged and disengaged overlapping in time.

Clutch characteristic curves are often used for controlling automated clutches. Such clutch characteristic curves are representations of the torque transmission capability of the clutch as a function of for example the position of the clutch regulator that disengages and/or engages the clutch. Hence, by means of an accurately estimated clutch characteristic curve, an accurate estimate of the torque transmittable by the clutch can be deduced by detecting the parameter of the clutch regulator, which parameter for example is defined as position or exerted pressure of a clutch regulator.

The estimated clutch characteristic curve of a friction clutch varies with time due to several operating parameters, such as the operating temperature and the wear condition of the clutch. Furthermore, there can be deviations with respect to the clutch characteristic curve within a series production of friction clutches of the same design because of manufacturing tolerances. Consequently, frequent and exact calibration of the estimated clutch characteristic curve of both friction clutches of a dual-clutch transmission increases comfort and low-wear operation of the automatic dual-clutch assembly.

In a known procedure for a clutch characteristic curve calibration of an automatic dual-clutch transmission according to US 2010/0114443 A1, it is proposed that the current touch point of the friction clutch of a sub-gearbox is determined by firstly engaging a tooth clutch of a load-free sub-gearbox with a defined regulating force of the associated gear regulator, and subsequently engaging the friction clutch of the same sub-gearbox until a cancellation of a synchronisation is determined on the tooth clutch. Calibration of the clutch characteristic curve of the friction clutch is based on the ascertained touch point.

This calibration method however has several disadvantageous. Unintentional engagement of the gear in question can occur in case of interconnection of the tooth-clutch. Moreover, the calibration must be performed during driving of the vehicle because the not load-free sub-gearbox must also be rotating. External factors due to driving might thus influence the calibration result.

DE 102 61 723 A1 discloses a method for calibrating an estimated clutch characteristic curve of a dual-clutch assembly of a transmission for a motor vehicle, wherein said transmission comprising a dual-clutch assembly with a first friction clutch, a first clutch regulator, a second friction clutch, and a second clutch regulator, a first input shaft connected to said first friction clutch, a second input shaft connected to said second friction clutch, at least one countershaft arranged parallel with at least one of said first and second input shafts, gearwheels, tooth clutches, and a transmission output shaft, wherein each of said friction clutches being drivingly connected to a prime mover by means of a clutch input shaft, and wherein different speed ratios between said clutch input shaft and said transmission output shaft can be established by selective engagement of said friction clutches and tooth clutches, wherein said method comprises the steps of:

a- mechanically interconnecting said first input shaft with said second input shaft with a known gear ratio;

b- controlling, according to a first alternative, a regulating parameter of said first clutch regulator such that said first friction clutch is engaged with a first torque transmission capability, that said second friction clutch initially is fully disengaged, and subsequently being engaged;

c- calculating a torque transmission capability of said second friction clutch at a certain regulating parameter of said second clutch regulator;

and d- adjusting an estimated clutch characteristic curve of said second friction clutch.

There is thus a need for an improved method for calibrating an estimated clutch characteristic curve, which removes the above mentioned disadvantages.

SUMMARY

The object of the present invention is to provide an inventive method and system for calibrating an estimated clutch characteristic curve of a dual-clutch assembly of a transmission for a motor vehicle, where the previously mentioned problems are partly avoided. The transmission comprises a dual-clutch assembly with a first friction clutch, a first clutch regulator, a second friction clutch, and a second clutch regulator, each of said friction clutches being drivingly connected to a prime mover by means of a clutch input shaft. The transmission further comprises a first input shaft connected to said first friction clutch, a second input shaft connected to said second friction clutch, at least one countershaft arranged parallel with at least one of said first and second input shafts, gearwheels, tooth clutches, and a transmission output shaft, wherein different speed ratios between said clutch input shaft and said transmission output shaft can be established by selective engagement of said friction clutches and tooth clutches.

The object of the present invention is achieved by the features of the characterising portion of claim 1, wherein said method comprising the steps of mechanically interconnecting said first input shaft with said second input shaft with a known gear ratio, whereby said transmission output shaft is disengaged from said clutch input shaft, controlling, according to a first alternative, a regulating parameter of said first clutch regulator such that said first friction clutch is engaged with a first torque transmission capability, that said second friction clutch initially is fully disengaged, and subsequently being engaged, or controlling according to a second alternative, that said second friction clutch is initially fully engaged, a regulating parameter of said first clutch regulator such that said first friction clutch is engaged with a first torque transmission capability, and that said second friction clutch subsequently being disengaged, calculating a torque transmission capability of said second friction clutch at a certain regulating parameter of said second clutch regulator; and adjusting an estimated clutch characteristic curve of said second friction clutch.

The object of the present invention is further achieved by the features of the characterising portion of claim 15, wherein said first input shaft is mechanically interconnected with said second input shaft via a known gear ratio, wherein said transmission output shaft is disengaged from said clutch input shaft, wherein said control unit is arranged to control, according to a first alternative, a regulating parameter of said first clutch regulator such that said first friction clutch is engaged with a first torque transmission capability, that said second friction clutch initially is fully disengaged, and subsequently being engaged; or wherein said control unit is arranged to control, according to a second alternative, wherein said second friction clutch is initially fully engaged, a regulating parameter of said first clutch regulator such that said first friction clutch is engaged with a first torque transmission capability, and said second friction clutch subsequently being disengaged, wherein said control unit is arranged to calculate a torque transmission capability of said second friction clutch at a certain regulating parameter of said second clutch regulator, and wherein said control unit is arranged to adjust an estimated clutch characteristic curve of said second friction clutch.

The inventive method and system thus solves the disadvantages according to the prior art by providing a calibration method that is executed having the transmission output shaft disengaged from the clutch input shaft. The calibration result will thus not be influenced by any vehicle or external factors outside the engine and transmission of the vehicle, such a driving wheels, drive shafts, end differential unit, road and weather conditions. Moreover, the calibration can preferably be conducted at vehicle standstill, and without the risk of unintentional engagement of any tooth clutch.

A further advantage of the inventive method and system is that not only small torque transmission capabilities, such as the clutch touch point, can be calibrated, but also medium and high torque transmission capabilities are possible to calibrate, because only the main friction clutches are used when torque slipping is required, and they are capable of transmitting relatively high torque levels.

Finally, by means of the alternative control algorithm of the independent claims of the inventive method and system, it is also possible to calibrate both an engagement hysteresis branch and a disengagement hysteresis branch of the estimated clutch characteristic curve of a friction clutch.

Further advantages are achieved by implementing one or several of the features of the dependent claims. According to an aspect of the invention, the torque transmission capability of said second friction clutch at a certain regulating parameter of said second clutch regulator is calculated based on at least said first torque transmission capability of said first friction clutch, said known gear ratio, and the actual regulating parameter of said second clutch regulator at the instant of ascertaining that a ratio between a rotational speed of said clutch input shaft and a rotational speed of at least one of said first input shaft, said second input shafts, said countershaft is altering during a gradual engagement of said second friction clutch according to said first alternative, or during a gradual disengagement of said second friction clutch according to said second alternative. The clutch characteristic curve of the second friction clutch can thus be calibrated by registering clutch engagement level of second friction clutch at time instant of begin of slipping of first friction clutch during calibration of hysteresis engagement branch, respectively begin of slipping of second friction clutch during calibration of hysteresis disengagement branch, based on the clutch characteristic curve of the first friction clutch. Consequently, the calibration method is independent on engine output torque; which is suitable when no accurate estimate of the engine output torque is available.

According to a further aspect of the invention, the torque transmission capability of said second friction clutch at a certain regulating parameter of said second clutch regulator is calculated based on at least a registered output torque of said prime mover, and said known gear ratio. This approach thus calibrates the clutch characteristic curve of the second friction clutch taking into account measured and/or estimated engine output torque, and is independent on the clutch characteristic curve of the first friction clutch. This leads to the advantage of that not only a single point on the clutch characteristic curve can be calibrated, but an entire range of the curve. Moreover, the approach does also not rely on finding a point of begin of clutch slipping, thus providing a less friction clutch wear-intensive calibration approach. Finally, the approach results in the advantage of providing calibrating of both the first friction clutch and the second friction clutch during the same calibration sequence.

According to a further aspect of the invention, the moments of inertia of the involved rotating parts of the transmission are preferably taken into account when calculating the torque transmission capability of the second friction clutch in a dynamic system. Should the calibration occur in a steady-state of the transmission, thus a state where no accelerations occur, there is no need to observe this aspect.

According to a further aspect of the invention, calculation of torque transmission capability of said second friction clutch also takes into account transmission drag torque.

According to a further aspect of the invention, the method comprising the step of waiting with engagement of said second friction clutch according to said first alternative, respectively disengagement of said second friction clutch according to said second alternative, until said ratio between a rotational speed of said clutch input shaft and a rotational speed of at least one of said first input shaft, said second input shafts, said countershaft is constant. This has the advantage of simplifying calculation of torque transmission capability of the second friction clutch.

According to a further aspect of the invention, the first control alternative is selected if calibration of an engagement hysteresis branch of the estimated clutch characteristic curve of said second friction clutch is requested, and wherein said second control alternative is selected if calibration of a disengagement hysteresis branch of the estimated clutch characteristic curve of said second friction clutch is requested.

## BRIEF DESCRIPTION OF THE DRAWINGS

The present invention will now be described in detail with reference to the figures, wherein:

Fig. 1 shows a dual-clutch transmission;
Fig. 2 shows a simplified clutch characteristic curve of a friction clutch;
Fig. 3A-3C shows clutch characteristics of the dual-clutch assembly when calibrating according to a first control alternative of the first embodiment of the invention;
Fig. 4A-4C shows clutch characteristics of the dual-clutch assembly when calibrating according to a second control alternative of the first embodiment of the invention.

## DETAILED DESCRIPTION

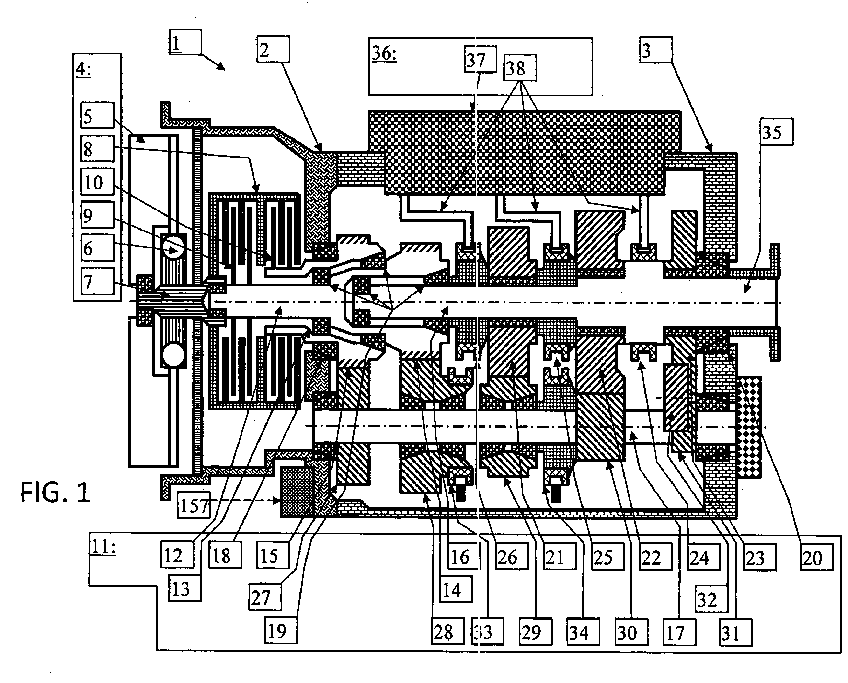

Fig. 1 shows schematically a longitudinal section of a dual-clutch transmission 1 on which the inventive method can be executed. The transmission 1 comprises two housing parts; a clutch housing 2 and a main housing 3. In the clutch housing 2 a frictional dual-clutch 4 is arranged, comprising the flywheel 5, a torsional damper 6 bolted thereon, a clutch input shaft 7, and a dual-clutch assembly 8 with a first friction clutch 9 and a second friction clutch 10. There is also a control unit and an associated clutch regulator device (not shown) to control the frictional dual-clutch 4. The flywheel 5 is attached to the engine crankshaft (not shown).

A main transmission 11 is arranged inside the main housing 3. There are two input shafts; a first input shaft 12 and a second input shaft 13. The first input shaft 12 can be rotationally driven by the first friction clutch 9. Similarly, the second input shaft 13 can be rotationally driven by the second friction clutch 10. First primary gear teeth 14 are integral with the first input shaft 12. Second primary gear teeth 15 are integral with the second input shaft 13. A main shaft 16 is coaxial with the input shafts 12 and 13. A countershaft 17 is parallel thereto. The second input shaft 13 is suspended in the clutch housing 2 by an input shaft bearing 18. Between the main shaft 16, first input shaft 12 and second input shaft 13, four pilot bearings 19 are arranged. The main shaft 16 is suspended in the main housing by a main shaft bearing 20.

The main shaft 16 carries three loose gearwheels; the second secondary loose gearwheel 21, the first secondary loose gearwheel 22 and the reverse secondary loose gearwheel 23. The first and reverse secondary loose gearwheels 22 and 23 can be rotationally locked to the main shaft 16 by a first/reverse tooth clutch 24. Moreover, the second secondary loose gearwheel 21 can be rotationally locked to the main shaft 16 by a second tooth clutch 25. Finally, the main shaft 16 can be rotationally locked to the first input shaft 12 by a direct tooth clutch 26.

On the countershaft 17 a second primary gearwheel 27 is rotationally fixed and meshes with the second primary gear teeth 15 of the second input shaft 13. A primary countershaft loose gearwheel 28 meshes with the first primary gear teeth 14 of the first input shaft 12. A secondary countershaft loose gearwheel 29 meshes with the second secondary loose gearwheel 21 on the main shaft 16. Furthermore, a first secondary gearwheel 30, which is integral with the countershaft 17, is meshing with the first secondary loose gearwheel 22 on the main shaft 16. Finally, a reverse secondary gearwheel 31 is integral with the countershaft 17 and drivingly connected with the reverse secondary loose gearwheel 23 via a reverse idler gearwheel 32. The primary countershaft loose gearwheel 28 can selectively be rotationally locked to the secondary countershaft loose gearwheel 29 by a first countershaft tooth clutch 33. The secondary countershaft loose gearwheel 29 can selectively be rotationally locked to the countershaft 17 by a second countershaft tooth clutch 34. An output shaft 35 is integral with the main shaft 16. The automatic or semi-automatic gear shift is carried out by a gear-shift controller 36 comprising a gear-shift control housing 37 and shift forks 38.

The inventive method and system for calibrating the dual-clutch assembly is based on the ability of the transmission to rotationally interconnect the first input shaft 12 with said second input shaft 13 with a known gear ratio, whereby said transmission output shaft 35 is disengaged from said clutch input shaft 7. Such a configuration of the transmission is possible by suitable control of the first countershaft tooth clutch 33 and the second countershaft tooth clutch 34. As described above, the primary countershaft loose gearwheel 28 meshes with the first primary gear teeth 14 of the first input shaft 12, and the primary countershaft loose gearwheel 28 can selectively be rotationally locked to the secondary countershaft loose gearwheel 29 by a first countershaft tooth clutch 33. Furthermore, the secondary countershaft loose gearwheel 29 can selectively be rotationally locked to the countershaft 17 by a second countershaft tooth clutch 34, and the second primary gearwheel 27, which is rotationally fixed to the countershaft 17, meshes with the second primary gear teeth 15 of the second input shaft 13. Consequently, the first input shaft 12 can be mechanically interconnected with said second input shaft 13 with a known gear ratio, whereby said transmission output shaft 35 is disengaged from said clutch input shaft 7.

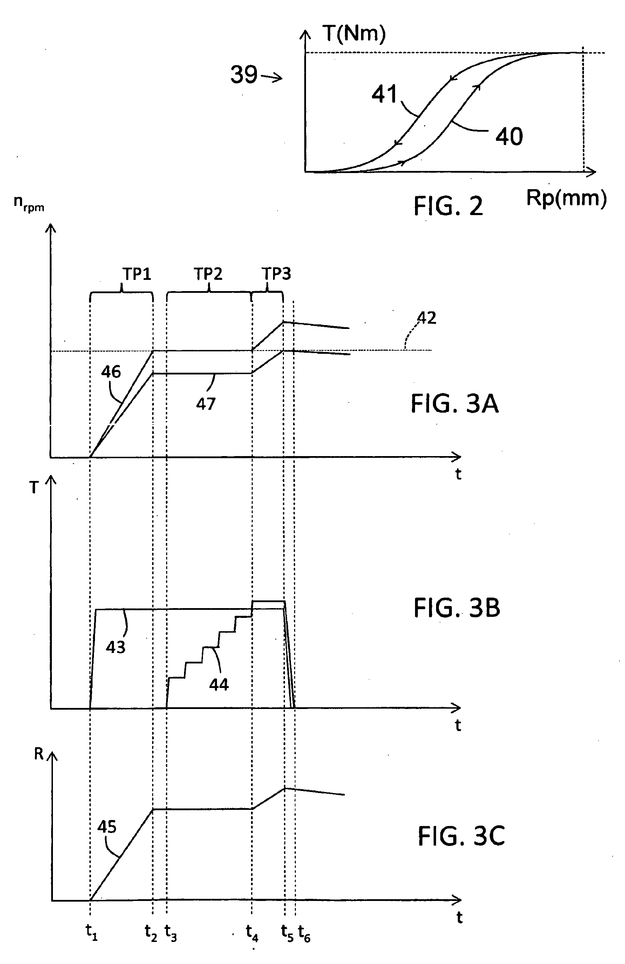

The purpose of the inventive method and system is to calibrate an estimated clutch characteristic curve of a dual-clutch assembly. The clutch characteristic curve of a friction clutch is illustrated in fig. 2, and is here defined as a representation of the torque transmissible by a clutch as a function of a regulating parameter of said clutch, such as clutch engagement pressure or clutch engagement position.

In fig. 2, a simplified clutch characteristic curve 39 of a friction clutch is schematically disclosed, which comprises engagement hysteresis branch 40 and a disengagement hysteresis branch 41. This appearance of the clutch characteristic curve 39 is the result of different torque transmission capability T of the friction clutch at the same regulating parameter Rp of said friction clutch, depending on if the clutch is being engaged or disengaged, thus corresponding to increased clutch engagement pressure, or decreased clutch engagement pressure.

The accuracy of the estimation of the clutch characteristic curve 39 depends on many factors, and high accuracy is only obtainable when the clutch is available for testing dismounted from the vehicle, and thus disconnected from external influencing factors, and in combination with the presence of a very accurate knowledge of the torque applied to the clutch input shaft 7. However, with the clutch being mounted in a running vehicle, and without accurate knowledge of the engine output torque due to varying and nonlinear friction losses, and the like, the estimate of the clutch characteristic curve 39 will be less accurate.

Fig. 3A to 3C schematically illustrate simplified clutch characteristics of the dual-clutch assembly 8 when calibrating a clutch characteristic curve 39 of a dual-clutch assembly 8 according to a first embodiment of the invention. Calibration is here conducted without taking into account engine output torque, because it is often difficult to obtain an accurate estimate of the engine output torque without installation of dedicated torque sensors, especially at low torque levels where unknown friction losses inflict a relatively large uncertainty with respect to total engine output torque. For calibration purposes, the first embodiment of the invention instead relies on a relatively accurate estimate of the clutch characteristic curve 39 of the first friction clutch 9 for calibrating the clutch characteristic curve 39 of the second friction clutch 10. The first friction clutch 9 can for example be of a type where the clutch characteristic curve 39 is determinable with a good accuracy based on only the touch point and/or slip point of the friction clutch.

For the purpose of calculating a clutch transmission capability of the second friction clutch 10 based on a known clutch characteristic curve 39 of the first friction clutch 9, it is necessary to establish a correspondence between the clutch characteristic curve 39 of the first friction clutch 9, of which an accurate estimate is available, and a clutch characteristic curve 39 of the second friction clutch 10, which should be calibrated. The inventive method solves this problem by identifying engagement positions of the first and second friction clutches 9, 10 that generates substantially identical torque transmission capacities. By then registering the regulating parameters of the first and second clutch regulators at this occasion, a torque transmission capability of the first friction clutch 9 can be determined by means of the clutch characteristic curve 39 of the first friction clutch 9, and subsequently, the clutch characteristic curve 39 of the second friction clutch 10 can be calibrated based on said regulating parameters of the first and second clutch regulators and said torque transmission capability of the first friction clutch 9, taking into account that the first and second friction clutches 9, 10 are engaged to provide substantially identical torque transmission capabilities.

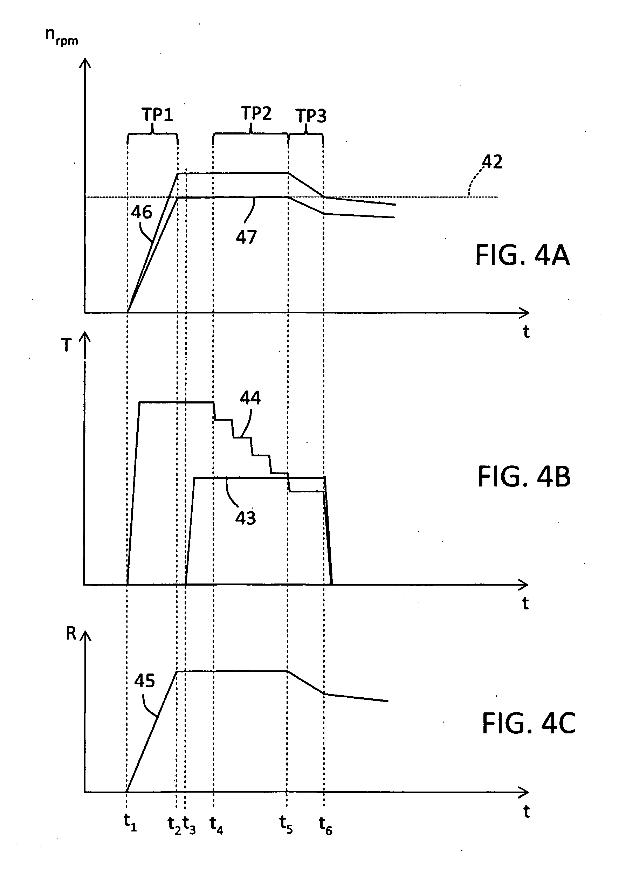

The method for identifying engagement positions of the first and second friction clutches 9, 10 that generates substantially identical torque transmission capability rely on gradual engagement or disengagement of the second friction clutch 10, and registering the instant when the first friction clutch 9, respectively the second friction clutch 10 is beginning to slip. Depending on what hysteresis branch 40, 41 of the clutch characteristic curve 39 should be calibrated, either the first or the second friction clutch 9, 10 will begin to slip, as will be explained more in detail below with reference to fig. 3A to 3C, and 4A to 4C.

Before engagement of any of the friction clutches, the transmission 1 must be configured to allow calibration of the dual-clutch assembly 8 having the first and second input shafts 12, 13 interconnected, and output shaft 35 of the transmission 1 disconnected from the clutch input shaft 7. Hence, the first input shaft 12 is mechanically interconnected with said second input shaft 13 over the second primary gearwheel 27, counter shaft 17, second countershaft tooth clutch 34, secondary countershaft loose gearwheel 29, first countershaft tooth clutch 33, and primary countershaft loose gearwheel 28, whereas first/reverse tooth clutch 24, second tooth clutch 25, and direct tooth clutch 26 are all in a disengaged position, such that said transmission output shaft 35 is disengaged from said clutch input shaft 7. The gear ratio determining the relative rotation of the first and second input shafts 12, 13 is determined by second primary gear teeth 15 and the second primary gearwheel 27 in combination with the first primary gear teeth 14 and the primary countershaft loose gearwheel 28. This provides the advantage that the calibration result will not be influenced by any vehicle or external factors outside the engine and transmission of the vehicle, such a driving wheels, drive shafts, end differential unit, road and weather conditions. Moreover, the calibration can also be conducted during vehicle standstill, and without the risk of unintentional engagement of any tooth clutch.

Fig. 3A to 3C disclose a first control alternative of the first embodiment of the invention. The first control alternative calibrates a hysteresis engagement branch 40 of the clutch characteristic curve 39 of the second friction clutch 10, wherein all plotted diagrams having different clutch characteristics on their Y-axis during the same time interval $t_1$-$t_6$ on their X-axis.

In fig. 3A, the Y-axis corresponds to rotation speed $n_{rpm}$, in fig. 3B, the Y-axis corresponds to torque transmission capability of the first and second friction clutches 9, 10, and in fig. 3C, the Y-axis corresponds to a ratio between a rotational speed of said clutch input shaft 7 and a rotational speed of any of the first input shaft 12, the second input shafts 13, or the countershaft 17. The X-axis corresponds to time t.

The prime mover of the vehicle is operated with constant speed and the clutch input shaft speed 42 is thus constant. At time $t_1$, a regulating parameter of the first clutch regulator is controlled such that the first friction clutch 9 is engaged with a first torque transmission capability 43. The regulating parameter of the first clutch regulator is selected as a result of the desired torque calibration point of the second friction clutch 10. Consequently, almost any torque transmission capability level can be calibrated, including medium to high torque transmission capability levels. Directly after engagement of the first friction clutch 9, a first time period TP1 passes until the first friction clutch 9 has been synchronised with the clutch input shaft 7 at time $t_2$. The first input shaft speed 46 is thus equal to clutch input shaft speed 42 at time $t_2$, and second input shaft speed 47 is offset the first input shaft speed 46 with a factor determined by the gear ratio that determines the relative rotation of the first and second input shafts 12, 13. During the first time period TP1 between $t_1$ - $t_2$, a ratio 45 between a rotational speed of said clutch input shaft 7 and a rotational speed of any of the first input shaft 12, the second input shafts 13, or the countershaft 17 is continuously altering until a steady state is reached at time $t_2$.

At time $t_3$, the second friction clutch 10 is being gradually engaged during a second time period TP2, in which the second friction clutch 10 is slipping. The gradual engagement can be executed stepwise, or continuously, or any other manner, as long as commencement of slipping of the first friction clutch 9 is ascertainable. The initial engagement level of the second friction clutch 10 is preferably adapted to the selected torque transmission capability 43 of the first friction clutch 9, such that the point of commencement of slipping of the first friction clutch 9 is quicker and more accurately ascertainable. In the control sequence of fig.3B however, no such adaptation has been illustrated.

At time $t_4$, the torque transmission capability of the second friction clutch 44 has increased to a level above the torque transmission capability of the first friction clutch 43, leading to a torque take-over from the first friction clutch 9 to the second friction clutch 10, and thus identifying the engagement position of the first and second friction clutches 9, 10 that generates substantially identical torque transmission capacities, bearing in mind that other torque take-over influencing factors like the interconnecting gear ratio of the transmission 7, transmission friction losses and moment of inertia have been disregarded. The torque take-over position can be determined by ascertaining commencement of slipping of the first friction clutch 9, or by ascertaining that both said friction clutches 9, 10 are slipping. The torque take-over occurs during a third time period TP3 from $t_4$ to $t_5$, during which time period both friction clutches 9, 10 are slipping.

Upon registering that the second friction clutch 10 has been synchronised with the clutch input shaft speed 42 at time $t_5$, both friction clutches 9, 10 are disengaged at time $t_6$, and the calibration of this torque transmission capability level is finished, and calibration of another torque transmission capability level can be initiated. Alternatively, several consecutive calibration sequences as described above can be executed for the same torque transmission capability level and a mean-value can subsequently be calculated to obtain a more accurate estimation of the clutch characteristic curve 39 of the second friction clutch 10.

Fig. 4A to 4C disclose a second control alternative of the first embodiment of the invention. The second control alternative calibrates a hysteresis disengagement branch 41 of the clutch characteristic curve 39 of the second friction clutch 10, wherein all plotted diagrams having different clutch characteristics on their Y-axis during the same time interval $t_1$-$t_6$ on their X-axis.

In fig. 4A, the Y-axis corresponds to rotation speed $n_{rprm}$, in fig. 4B, the Y-taxis corresponds to torque transmission capability of the first and second friction clutches 9, 10, and in fig. 4C, the Y-axis corresponds to a ratio between a rotational speed of said clutch input shaft 7 and a rotational speed of any of the first input shaft 12, the second input shafts 13, or the countershaft 17. The X-axis corresponds to time t.

The prime mover of the vehicle is also here operated with constant speed and the clutch input shaft speed 42 is thus constant. At time $t_1$, a regulating parameter of the second clutch regulator is controlled such that the second friction clutch 10 is fully engaged to provide maximal torque transmission capability 44. Directly after engagement of the second friction clutch 10, a first time period TP1 passes until the second friction clutch 10 has been synchronised with the clutch input shaft 7 at time $t_2$. The second input shaft speed 47 is thus equal to clutch input shaft speed 42 at time $t_2$, and first input shaft speed 46 is offset the second input shaft speed 47 with a factor determined by the gear ratio that determines the relative rotation of the first and second input shafts 12, 13. During the first time period TP1 between $t_1$-$t_2$, a ratio 45 between a rotational speed of said clutch input shaft 7 and a rotational speed of any of the first input shaft 12, the second input shafts 13, or the countershaft 17 is continuously altering until a steady state is reached at time $t_2$.

At time $t_3$, steady state of ratio has been ascertained, and a regulating parameter of the first clutch regulator is controlled such that the first friction clutch 9 is engaged with a first torque transmission capability 43. The regulating parameter of the first clutch regulator is selected as a result of the desired torque calibration point of the second friction clutch 10. At time $t_4$, the second friction clutch 10 is being gradually disengaged during a second time period TP2. The gradual disengagement can be executed stepwise, or continuously, or any other manner, as long as commencement of slipping of the second friction clutch 10 is ascertainable.

At time $t_5$, the torque transmission capability of the second friction clutch 44 has decreased to a level below the torque transmission capability of the first friction clutch 43, leading to torque take-over from the second friction clutch 10 to the first friction clutch 9, and thus identifying the disengagement position of the second friction clutch 10 that generates substantially identical torque transmission capability as the first friction clutch 9, bearing in mind that other torque take-over influencing factors like the interconnecting gear ratio of the transmission 1, transmission friction losses and moment of inertia have been disregarded. The torque take-over position can be determined by ascertaining commencement of slipping of the second friction clutch 10, or by ascertaining that both said friction clutches 9, 10 are slipping. The torque take-over occurs during a third time period TP3 from $t_5$ to $t_6$, during which time period both friction clutches 9, 10 are slipping.

Upon registering that the first input shaft speed 46 has been synchronised with the clutch input shaft speed 42 at time $t_6$, both friction clutches 9, 10 are disengaged and the calibration of this torque transmission capability level is finished. Note that the first friction clutch 9 has been slipping between time $t_1$ to $t_6$. Calibration of another torque transmission capability level can now be initiated. Alternatively, several consecutive calibration sequences as described above can be executed for the same torque transmission capability level and a mean-value can subsequently be calculated to obtain a more accurate estimation of the clutch characteristic curve 39 of the second friction clutch 10.

To achieve an accurate calculation of the torque transmission capability of the second friction clutch 10 based on the torque transmission capability of the first friction clutch 9, the following factors should be included: Gear ratio between the first and second input shafts 12, 13; moments of inertia of the rotating transmission components that change rotation speed during the torque over-take, and the frictional losses resulting mainly from the transmission oil, hereinafter referred to as torque drag. The following equation is preferably used for calculating the torque transmission capability of the second friction clutch 10 after having ascertained the regulating parameters of the first and second clutch regulators that initiates a torque take-over in the two alternatives of the calibration method described above:

7

$$T_{C2} = \frac{J\,\omega_{COUNTER} + T_{C1}i_{P1} - T_{DRAG}}{i_{P2}}$$

Equation 1

where

$T_{c2}$ denotes torque transmission capability of the second friction clutch 10;

$T_{c1}$ denotes torque transmission capability of the first friction clutch 9;

J denotes the moment of inertia of the rotating transmission components that change rotation speed during the torque over-take, converted to countershaft 17;

$\omega_{COUNTER}$ denotes rotation speed of counter shaft 17;

$T_{DRAG}$ denotes frictional losses induced manly by transmission oil, converted to countershaft 17;

$i_{P1}$ denotes gear ratio from first input shaft 12 to counter shaft 17;

$i_{P2}$ denotes gear ratio from second input shaft 13 to counter shaft 17.

The calibration method according to the first embodiment of the invention is finally terminated by adjusting an estimated clutch characteristic curve 39 of said second friction clutch 10 based on the ascertained regulating parameter of the second clutch regulator and the calculated torque transmission capability of the second friction clutch 10 according to equation 1.

The transmission drag torque can be attained in various ways. One possibility is to use an engine specific predefined correspondence function between transmission drag torque and transmission oil temperature, and to calculate a transmission drag torque based on transmission oil temperature, which is acquired by an oil temperature sensor. According to an alternative method, the transmission drag torque can be determined by executing a specific sequence of commands, thus obtaining a more accurate level of transmission drag torque. According to the alternative method, the transmission drag torque is determined by means of controlling clutch input shaft speed 42 to have a constant value, engaging one of said first and second friction clutches 9, 10, with or without mechanically interconnection of said first input shaft 12 with said second input shaft 13 with a known gear ratio, waiting until the associated input shaft 12, 13 is synchronised with said clutch input shaft 7, disengaging said previously engaged friction clutch, registering input shaft speed retardation; and finally determining transmission drag torque based on at least registered input shaft speed retardation and moments of inertia of the rotating transmission components 9, 10, 12, 13, 17, 21, 22, 23, 27, 28, 29, 30, 31, 32, 33, 34 involved in the method.

In the first embodiment, calibration was based upon a relatively accurate knowledge of the clutch characteristic curve 39 of the first friction clutch 9. This has the advantage that calibration can be performed without knowledge of the engine output torque, which is mostly difficult to accurately estimate. However, according to a second embodiment of the invention, the calibration method can be adapted to rely on the estimated and/or measured output torque of the main engine instead, and being independent on any input from the first friction clutch 9. This calibration method has the advantage that no accurate estimate of the clutch characteristic curve 39 of the first friction clutch 9 must be available, that calibration of a wide range of the clutch characteristic curve 39 is possible during a single calibration sequence, and not only a single point of the clutch characteristic curve 39 as in the first embodiment, and that the clutch characteristic curve 39 of both the first and second friction clutches 9, 10 can be calibrated during the same calibration sequence.

The calibration sequence according to a first control alternative of the second embodiment of the invention will now be described. The calibration sequence is executed very similarly to the calibration sequence according to first control alternative of the first embodiment, and mainly calculation of torque transmission capability of said second friction clutch 10 at a certain regulating parameter of said second clutch regulator is performed differently. The calibration according to the first control alternative of the second embodiment begins with configuration of the transmission 1 to allow calibration of the dual-clutch assembly 8 having the first and second input shafts 12, 13 interconnected, and output shaft 35 of the transmission 1 disconnected from the clutch input shaft 7, as described above in connection to the first embodiment, and controlling operation of the prime mover of the vehicle to run with constant speed, such that the clutch input shaft speed 42 thus is constant.

Thereafter, a regulating parameter of the first clutch regulator is controlled such that the first friction clutch 9 is fully engaged to provide maximal torque transmission capability. Subsequently, after synchronisation of the first friction clutch 9 with the clutch input shaft 7 has been obtained, the second friction clutch 10 is being engaged, and the torque transmission capability of the second friction clutch 10 is calculated based on an estimated and/or measured output torque of said prime mover, and said known gear ratio. Preferably, for the purpose of obtaining improved accuracy, also the friction losses within the transmission 1 are included in the calculation. Equation 2 below is preferably used for calculating the torque transmission capability of the second friction clutch 10 according to the second embodiment,

$$T_{C2} = \frac{T_E i_{P1} + T_{DRAG}}{i_{P1} - i_{P2}}$$ 

Equation 2

where

$T_{C2}$ denotes torque transmission capability of the second friction clutch 10;
$T_E$ denotes engine output torque;
$T_{DRAG}$ denotes frictional losses induced mainly by transmission oil, converted to countershaft 17;
$i_{P1}$ denotes gear ratio from first input shaft 12 to counter shaft 17;
$i_{P2}$ denotes gear ratio from second input shaft 13 to counter shaft 17.

By means of this calibration method, almost any point along the clutch characteristic curve 39 is obtainable for calibration purposes, simply by engaging the second friction clutch 10 with the desired regulator parameter and measuring/calculating the corresponding torque transmission capability of the second friction clutch 10. More than a single point on the clutch characteristic curve 39 can be registered during the same calibration sequence by stepwise or continuously increased engagement level of the second friction clutch 10, whilst measuring and calculating the torque transmission capability of the second friction clutch 10 at each level.

According to a specific engagement process, both the first and the second friction clutches 9, 10 can be calibrated using a single calibration sequence. This is performed by firstly controlling a regulating parameter of the first clutch regulator, such that the first friction clutch 9 is engaged with a first torque transmission capability corresponding to a desired torque calibration point of the first friction clutch 9. Subsequently, after synchronisation of the first friction clutch 9 with the clutch input shaft 7 has been completed, the second friction clutch 10 is being engaged whilst measuring/estimating output torque of said prime mover, as described above with respect to the first control alternative of the second embodiment. The difference with respect to above is that engagement of the second friction clutch 10 is increased to a level where a torque take-over from the first friction clutch 9 to the second friction clutch 10 occurs, and thereby a torque transmission capability of also the first friction clutch 9 is ascertainable at a single point of its clutch characteristic curve 39. Hence, both the first and second friction clutches 9, 10 are calibrated during the same calibration sequence.

According to the calibration method of the second embodiment where no torque take-over occurs during the calibration method, there is no reason for taking moment of inertia into account. However, a calibration method of the second embodiment where torque take-over occurs during the calibration method, moment of inertia can be taken into account to provide a more accurate calculation of the torque transmission capability of the first and second friction clutches 9, 10.

The hysteresis disengagement branch 41 of a friction clutch can be calibrated according to a second control alternative of the second embodiment, wherein the calibration is executed in a similar manner as described with reference to the second alternative of the first embodiment.

The prime mover of the vehicle is operated with constant speed and the clutch input shaft speed 42 is thus constant. A regulating parameter of the second clutch regulator is controlled such that the second friction clutch 10 is fully engaged to provide maximal torque transmission capability, and a regulating parameter of the first clutch regulator is controlled such that the first friction clutch 9 is engaged with a torque transmission capability corresponding to a desired torque calibration point of the first friction clutch 9. After synchronisation, the second friction clutch 10 is being disengaged, stepwise, continuously, or any other manner. If disengagement of the second friction clutch 10 is executed stepwise to a torque transmission capability level below the torque transmission capability level of the first friction clutch 9, a torque take-over will take place and the torque transmission capability of the second friction clutch 10 is determinable using the engine output torque. If disengagement is executed such as the point of commencement of slipping of the second friction clutch 10 is ascertainable, also the first friction clutch 9 can be calibrated accordingly. If the torque transmission capability of the second friction clutch 10 is decreased continuously, calibration of a wide range of the clutch characteristic curve 39 of the second friction clutch 10 is possible during a single calibration sequence.

Similar to the first embodiment, several consecutive calibration sequences can be executed for the same torque transmission capability level according to the second embodiment, and a mean-value can subsequently be caicuiated to obtain a more accurate estimation of the clutch characteristic curve 39 of the first and/or second friction clutches 9, 10.

Throughout the disclosure of the invention, a calibration method for the second friction clutch 10 has been described. The calibration method however does not make any distinctions with respect to which physical friction clutch of the dual-clutch assembly is being calibrated, and the inventive calibration method is thus equally applicable to any one of the two friction clutches 9, 10 of a dual-clutch assembly. The terms "first" and "second" thus only serve to clearly distinguish the two friction clutches from each other, without limiting the invention to calibration of only one thereof.

Note also that the clutch characteristics of the dual-clutch assembly plotted in fig. 3A to 3C, and 4A to 4C only serves to disclose the principles of the invention, were the differences in gear ratio $i_{P1}$ and $i_{P2}$, transmission frictional losses $T_{DRAG}$, non-linearity, moment of inertia, temperature effects, etc have been completely or partly disregarded when depicting the torque take-over level, and they should thus not be deemed to illustrate the real behaviour of a transmission 1.

A calibration sequence here defines a sequence of ever increasing engagement forces of a single friction clutch, or a sequence of ever decreasing engagement forces of a single friction clutch.

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description thereto are to be regarded as illustrative in nature, and not restrictive.

Table of references

| 1 | Transmission |
|---|---|
| 2 | Clutch housing |
| 3 | Main housing |
| 4 | Frictional dual-clutch |
| 5 | Flywheel |
| 6 | Torsional damper |
| 7 | Clutch input shaft |
| 8 | Dual-clutch assembly |
| 9 | First friction clutch |
| 10 | Second friction clutch |
| 11 | Main transmission |
| 12 | First input shaft |
| 13 | Second input shaft |
| 14 | First primary gear teeth |
| 15 | Second primary gear teeth |
| 16 | Main shaft |
| 17 | Countershaft |
| 18 | Input shaft bearing |
| 19 | Pilot bearings |
| 20 | Main shaft bearing |
| 21 | Second secondary loose gearwheel |
| 22 | First secondary loose gearwheel |
| 23 | Reverse secondary loose gearwheel |
| 24 | First/reverse tooth clutch |
| 25 | Second tooth clutch |
| 26 | Direct tooth clutch |
| 27 | Second primary gearwheel |
| 28 | Primary countershaft loose gearwheel |
| 29 | Secondary countershaft loose gearwheel |
| 30 | First secondary gearwheel |
| 31 | Reverse secondary gearwheel |
| 32 | Reverse idler gearwheel |
| 33 | First countershaft tooth clutch |
| 34 | Second countershaft tooth clutch |
| 35 | Output shaft |
| 36 | Gear-shift controller |
| 37 | Gear-shift control housing |
| 38 | Shift forks |
| 39 | Clutch characteristic curve |

| 40 | Engagement hysteresis branch |
| 41 | Disengagement hysteresis branch |
| 42 | Clutch input shaft speed |
| 43 | Torque transmission capability of first friction clutch |
| 44 | Torque transmission capability of second friction clutch |
| 45 | Ratio |
| 46 | First input shaft speed |
| 47 | Second input shaft speed |
| T | Torque transmission capability |
| Rp | Regulating parameter |
| $N_{rpm}$ | Speed in rotation per minute |
| R | Ratio |

**Claims**

1. A method for calibrating an estimated clutch characteristic curve (39) of a dual-clutch assembly (8) of a transmission (1) for a motor vehicle, wherein said transmission (1) comprising a dual-clutch assembly (8) with a first friction clutch (9), a first clutch regulator, a second friction clutch (10), and a second clutch regulator, a first input shaft (12) connected to said first friction clutch (9), a second input shaft (13) connected to said second friction clutch (10), at least one countershaft (17) arranged parallel with at least one of said first and second input shafts (12, 13), gearwheels (27, 28, 29), tooth clutches (33, 34), and a transmission output shaft (35), wherein each of said friction clutches (9, 10) being drivingly connected to a prime mover by means of a clutch input shaft (7), and wherein different speed ratios between said clutch input shaft (7) and said transmission output shaft (35) can be established by selective engagement of said friction clutches (9, 10) and tooth clutches (33, 34), **characterised in that** said method comprising the steps of:

   - mechanically interconnecting said first input shaft (12) with said second input shaft (13) with a known gear ratio, whereby said transmission output shaft (35) is disengaged from said clutch input shaft (7);
   - controlling,
   according to a first alternative, a regulating parameter of said first clutch regulator such that said first friction clutch (9) is engaged with a first torque transmission capability, that said second friction clutch (10) initially is fully disengaged, and subsequently being engaged; or
   according to a second alternative, that said second friction clutch (10) is initially fully engaged, a regulating parameter of said first clutch regulator such that said first friction clutch (9) is engaged with a first torque transmission capability, and that said second friction clutch (10) subsequently being disengaged;
   - calculating a torque transmission capability of said second friction clutch (10) at a certain regulating parameter of said second clutch regulator; and
   - adjusting an estimated clutch characteristic curve (39) of said second friction clutch (10).

2. The method according to claim 1, wherein said torque transmission capability of said second friction clutch (10) at a certain regulating parameter of said second clutch regulator is calculated based on at least said first torque transmission capability of said first friction clutch (9), said known gear ratio, and the actual regulating parameter of said second clutch regulator at the instant of ascertaining that a ratio between a rotational speed of said clutch input shaft (7) and a rotational speed of at least one of said first input shaft (12), said second input shafts (13), said countershaft (17) is altering during a gradual engagement of said second friction clutch (10) according to said first alternative, or during a gradual disengagement of said second friction clutch (10) according to said second alternative.

3. The method according to claim 2, wherein said torque transmission capability of said second friction clutch (10) at a certain regulating parameter of said second clutch regulator is calculated at the instant of ascertaining that both a ratio between a rotational speed of said clutch input shaft (7) and a rotational speed of said first input shaft (12), and a ratio between a rotational speed of said clutch input shaft (7) and a rotational speed of said second input shaft (13) are altering.

4. The method according to claim 1, wherein said torque transmission capability of said second friction clutch (10) at a certain regulating parameter of said second clutch regulator is calculated based on at least a registered output torque of said prime mover, and said known gear ratio.

5. The method according to claim 4, wherein the torque transmission capability of the second friction clutch (9) is calculated over a range of regulating parameters of said second clutch regulator by means of gradually increased engagement level of the second friction clutch (10) according to the first control alternative, and by means of gradually decreased engagement level of the second friction clutch (10) according to the second control alternative, and continuous registering of output torque of said prime mover.

6. The method according to any of claims 4 or 5, wherein the clutch characteristic curve (39) of both the first and second friction clutches (9, 10) are calibrated during the same calibration sequence by means of firstly calculating the torque transmission capability of the second friction clutch (10) based on registered output torque of said prime mover, and said known gear ratio, and subsequently calculating the torque transmission capability of the first friction clutch (9) based on at least the calculated torque transmission capability of said second friction clutch (10), said known gear ratio, and the actual regulating parameter of said first clutch regulator at the instant of ascertaining that a ratio between a rotational speed of said clutch input shaft (7) and a rotational speed of at least one of said first input shaft (12), said second input shafts (13), said countershaft (17) is altering during a gradual engagement of said second friction clutch (10) according to said first alternative, or during a gradual disengagement of said second friction clutch (10) according to said second alternative.

7. The method according to any of the previous claims, wherein upon detecting that said ratio between a rotational speed of said clutch input shaft (7) and a rotational speed of at least one of said first input shaft (12), said second input shafts (13), said countershaft (17) is altering, ascertaining also an angular acceleration of at least one of said first input shaft (12), said second input shafts (13), said countershaft (17), and wherein said step of calculating a torque transmission capability of said second friction clutch (10) is further based on said ascertained angular acceleration, and moments of inertia of the rotating transmission components (9, 10, 12, 13, 17, 21, 22, 23, 27, 28, 29, 30, 31, 32, 33, 34) involved in the calibration method.

8. The method according to any of the previous claims, wherein said step of calculating a torque transmission capability of said second friction clutch (10) is further based on transmission drag torque.

9. The method according to claim 8, wherein said transmission drag torque is attained by means of a predefined function of transmission drag torque verses transmission oil temperature, wherein said transmission oil temperature is acquired by at least one oil temperature sensor.

10. The method according to claim 8, wherein said transmission drag torque is determined by means of the steps of:

    - controlling clutch input shaft speed (42) to have a constant value;
    - engaging one of said first and second friction clutches (9, 10), with or without mechanically interconnection of said first input shaft (12) with said second input shaft (13) with a known gear ratio;
    - waiting until the associated input shaft (12, 13) in synchronised with said clutch input shaft (7);
    - disengaging said previously engaged friction clutch (9, 10);
    - registering input shaft speed retardation; and
    - determining transmission drag torque based on at least registered input shaft speed retardation and moments of inertia of the rotating transmission components (9, 10, 12, 13, 17, 21, 22, 23, 27, 28, 29, 30, 31, 32, 33, 34) involved in the transmission drag torque determination method.

11. The method according to any of the previous claims, wherein said method comprising the step of waiting with engagement of said second friction clutch (10) according to said first alternative, respectively disengagement of said second friction clutch (10) according to said second alternative, until said ratio between a rotational speed of said clutch input shaft (7) and a rotational speed of at least one of said first input shaft (12), said second input shafts (13), said countershaft (17) is constant.

12. The method according to any of the previous claims, wherein said engagement of said second friction clutch (10) according to said first alternative respectively disengagement of said second friction clutch (10) according to said second alternative is executed by stepwise change of engagement level, or by continuous change of engagement level.

13. The method according to any of the previous claims, wherein said regulating parameter is one of; a friction clutch position or an applied pressure of an associated clutch regulator.

**EP 2 655 914 B1**

14. The method according to any of the previous claims, wherein said first control alternative is selected if calibration of an engagement hysteresis branch (40) of the estimated clutch characteristic curve (39) of said second friction clutch (10) is requested, and wherein said second control alternative is selected if calibration of a disengagement hysteresis branch (41) of the estimated clutch characteristic curve (39) of said second friction clutch (10) is requested.

15. A dual-clutch calibration system for calibrating an estimated clutch characteristic curve (39) of a dual-clutch assembly (8) of a motor vehicle transmission (1), which comprises a dual-clutch assembly (8) having a first friction clutch (9), a first clutch regulator, a second friction clutch (10), and a second clutch regulator, a first input shaft (12) connected to said first friction clutch (9), a second input shaft (13) connected to said second friction clutch (10), at least one countershaft (17) arranged parallel with at least one of said first and second input shafts (12, 13), gearwheels (27, 28, 29), tooth clutches (33, 34), a transmission output shaft (35), and a control unit, wherein each of said friction clutches (9, 10) being drivingly connected to a prime mover by means of a clutch input shaft (7), and wherein different speed ratios between said clutch input shaft (7) and said transmission output shaft (35) can be established by selective engagement of said friction clutches (9, 10) and tooth clutches (33, 34), **characterised in that**:

- said first input shaft (12) is mechanically interconnected with said second input shaft (13) via a known gear ratio, wherein said transmission output shaft (35) is disengaged from said clutch input shaft (7);
- said control unit is arranged to control,
according to a first alternative, a regulating parameter of said first clutch regulator such that said first friction clutch (9) is engaged with a first torque transmission capability, that said second friction clutch (10) initially is fully disengaged, and subsequently being engaged; or
according to a second alternative, that said second friction clutch (10) is initially fully engaged, a regulating parameter of said first clutch regulator such that said first friction clutch (9) is engaged with a first torque transmission capability, and that said second friction clutch (10) subsequently being disengaged;
- said control unit is arranged to calculate a torque transmission capability of said second friction clutch (10) at a certain regulating parameter of said second clutch regulator; and **in that**
- said control unit is arranged to adjust an estimated clutch characteristic curve (39) of said second friction clutch (10).

**Patentansprüche**

1. Verfahren zur Kalibrierung einer geschätzten Kupplungskennlinie (39) einer Doppelkupplungsanordnung (8) eines Getriebes (1) für ein Kraftfahrzeug, wobei das Getriebe (1) eine Doppelkupplungsanordnung (8) mit einer ersten Reibungskupplung (9), einer ersten Kupplungsregeleinrichtung, einer zweiten Reibungskupplung (10) und einer zweiten Kupplungsregeleinrichtung, eine erste Eingangswelle (12), die mit der ersten Reibungskupplung (9) verbunden ist, eine zweite Eingangswelle (13), die mit der zweiten Reibungskupplung (10) verbunden ist, wenigstens eine Gegenwelle (17), die parallel zu wenigstens einer der ersten und zweiten Eingangswelle (12, 13) angeordnet ist, Zahnrädern (27, 28, 29), Zahnkupplungen (33, 34) und eine Getriebeausgangswelle (35) umfasst, wobei jede der Reibungskupplungen (9, 10) mit einem Hauptantrieb mittels einer Kupplungseingangswelle (7) antriebsverbunden ist, und wobei unterschiedliche Drehzahlverhältnisse zwischen der Kupplungseingangswelle (7) und der Getriebeausgangswelle (35) durch selektiven Eingriff der Reibungskupplungen (9, 10) und Zahnkupplungen (33, 34) hergestellt werden können, **dadurch gekennzeichnet, dass** das Verfahren die Schritte umfasst:

- mechanische Verbindung der ersten Eingangswelle (12) mit der zweiten Eingangswelle (13) mit einem bekannten Übersetzungsverhältnis, wobei die Getriebeausgangswelle (35) außer Eingriff mit der Kupplungseingangswelle (7) steht,
- Steuerung
gemäß einer ersten Alternative, eines Regelparameters der ersten Kupplungsregeleinrichtung, so dass die erste Reibungskupplung (9) mit einem ersten Drehmomentübertragungsvermögen in Eingriff steht, dass die zweite Reibungskupplung (10) anfänglich vollständig außer Eingriff steht, und darauffolgend in Eingriff gebracht wird, oder
gemäß einer zweiten Alternative, bei der die zweite Reibungskupplung (10) anfänglich vollständig in Eingriff steht, eines Regelparameters der ersten Kupplungsregeleinrichtung, so dass die erste Reibungskupplung (9) mit einem ersten Drehmomentübertragungsvermögen in Eingriff steht, und dass die zweite Reibungskupplung (10) nachfolgend außer Eingriff gebracht wird,
- Berechnung eines Drehmomentübertragungsvermögens der zweiten Reibungskupplung (10) bei einem bestimmten Regelparameter der zweiten Kupplungsregeleinrichtung, und

- Einstellung einer geschätzten Kupplungskennlinie (39) der zweiten Reibungskupplung (10).

2. Verfahren nach Anspruch 1, wobei das Drehmomentübertragungsvermögen der zweiten Reibungskupplung (10) bei einem bestimmten Regelparameter der zweiten Kupplungsregeleinrichtung auf der Basis wenigstens des ersten Drehmomentübertragungsvermögens der ersten Reibungskupplung (9), dem bekannten Übersetzungsverhältnis und dem Ist-Regelparameter der zweiten Kupplungsregeleinrichtung in dem Moment berechnet wird, in dem bestimmt wird, dass ein Verhältnis zwischen einer Drehzahl der Kupplungseingangswelle (7) und einer Drehzahl wenigstens einer von der ersten Eingangswelle (12), der zweiten Eingangswelle (13) und der Gegenwelle (17) sich während eines allmählichen Eingriffs der zweiten Reibungskupplung (10) gemäß der ersten Alternative oder während eines allmählichen Außer-EingrifF-Kommens der zweiten Reibungskupplung (10) gemäß der zweiten Alternative ändert.

3. Verfahren nach Anspruch 2, wobei das Drehmomentübertragungsvermögen der zweiten Reibungskupplung (10) bei einem bestimmten Regelparameter der zweiten Kupplungsregeleinrichtung in dem Moment berechnet wird, in dem bestimmt wird, dass sowohl ein Verhältnis zwischen einer Drehzahl der Kupplungseingangswelle (7) und einer Drehzahl der ersten Eingangswelle (12) als auch ein Verhältnis zwischen einer Drehzahl der Kupplungseingangswelle (7) und einer Drehzahl der zweiten Eingangswelle (13) sich ändern.

4. Verfahren nach Anspruch 1, wobei das Drehmomentübertragungsvermögen der zweiten Reibungskupplung (10) bei einem bestimmten Regelparameter der zweiten Kupplungsregeleinrichtung auf der Basis wenigstens eines registrierten Ausgangsdrehmoments des Hauptantriebs und des bekannten Übersetzungsverhältnisses berechnet wird.

5. Verfahren nach Anspruch 4, wobei das Drehmomentübertragungsvermögen der zweiten Reibungskupplung (9) über einen Bereich der Regelparameter der zweiten Kupplungsregeleinrichtung bei der ersten Steueralternative mittels eines allmählich ansteigenden Eingriffsniveaus der zweiten Reibungskupplung (10), und bei der zweiten Steueralternative mittels eines allmählich abnehmenden Eingriffsniveaus der zweiten Reibungskupplung (10), und fortlaufender Registrierung des Ausgangsdrehmoments des Hauptantriebs berechnet wird.

6. Verfahren nach irgendeinem der Ansprüche 4 oder 5, wobei die Kupplungskennlinien (39) sowohl der ersten als auch der zweiten Reibungskupplung (9, 10) während derselben Kalibrierungssequenz dadurch kalibriert werden, dass zuerst das Drehmomentübertragungsvermögen der zweiten Reibungskupplung (10) auf der Basis eines registrierten Ausgangsdrehmoments des Hauptantriebs und dem bekannten Übersetzungsverhältnis berechnet wird, und danach das Drehmomentübertragungsvermögen der ersten Reibungskupplung (9) auf der Basis wenigstens des berechneten Drehmomentübertragungsvermögens der zweiten Reibungskupplung (10), dem bekannten Übersetzungsverhältnis und dem Ist-Regel-Parameter der ersten Kupplungsregeleinrichtung in dem Moment berechnet wird, in dem bestimmt wird, dass ein Verhältnis zwischen einer Drehzahl der Kupplungseingangswelle (7) und einer Drehzahl wenigstens einer von der ersten Eingangswelle (12), der zweiten Eingangswelle (13) und der Gegenwolle (17) sich während eines allmählichen Eingriffs der zweiten Reibungskupplung (10) gemäß der ersten Alternative oder während eines allmählichen AußerEingriff-Kommens der zweiten Reibungskupplung (10) gemäß der zweiten Alternative ändert.

7. Verfahren nach irgendeinem der vorhergehenden Ansprüche, wobei bei Erfassung, dass sich das Verhältnis zwischen einer Drehzahl der Kupplungseingangswelle (7) und einer Drehzahl von wenigstens einer der ersten Eingangswelle (12), der zweiten Eingangswelle (13) und der Gegenwelle (17) ändert, wenigstens auch eine Winkelbeschleunigung von wenigstens einer der ersten Eingangswelle (12), der zweiten Eingangswelle (13) und der Gegenwelle (17) bestimmt wird, und wobei der Schritt der Berechnung eines Drehmomentübertragungsvermögens der zweiten Reibungskupplung (10) außerdem auf der bestimmten Winkelbeschleunigung und der Trägheitsmomente der drehenden Getriebekomponenten (9, 10, 12, 13, 17, 21, 22, 23, 27, 28, 29, 30, 31, 32, 33, 34) basiert, die in das Kalibrierungsverfahren involviert sind.

8. Verfahren nach irgendeinem der vorhergehenden Ansprüche, wobei der Schritt der Berechnung eines Drehmomentübertragungsvermögens der zweiten Reibungskupplung (10) außerdem auf einem Getriebeschleppmoment basiert.

9. Verfahren nach Anspruch 8, wobei das Getriebeschleppmoment mittels einer vorherbestimmten Funktion von Getriebeschleppmoment gegen Getriebeöltemperatur erhalten wird, wobei die Getriebeöltemperatur durch wenigstens einen Öltemperatursensor erhalten wird.

10. Verfahren nach Anspruch 8, wobei das Getriebeschleppmoment mittels der Schritte bestimmt wird:

- Steuerung der Kupplungseingangswellendrehzahl (42), so dass sie einen konstanten Wert hat, In-Eingriff-Bringen einer der ersten und zweiten Reibungskupplung (9, 10) mit oder ohne mechanische Zwischenverbindung der ersten Eingangswelle (12) mit der zweiten Eingangswelle (13) mit einem bekannten Drehzahlverhältnis,
- Warten, bis die zugeordnete Eingangswelle (12, 13) mit der Kupplungseingangswelle (7) synchronisiert ist,
- Außer-Eingriff-Bringen der zuvor in Eingriff gebrachten Reibungskupplung (9, 10),
- Registrierung der Eingangswellendrehzahlverzögerung und
- Bestimmung des Übertragungsschleppmoments auf der Basis wenigstens der registrierten Eingangswellendrehzahlverzögerung und der Trägheitsmomente der drehenden Getriebekomponenten (9, 10, 12, 13, 17, 21, 22, 23, 27, 28, 29, 30, 31, 32, 33, 34), die in das Kalibrierungsverfahren involviert sind.

11. Verfahren nach irgendeinem der vorhergehenden Ansprüche, wobei das Verfahren den Schritt umfasst, dass bei der ersten Alternative mit dem Eingriff der zweiten Reibungskupplung (10) bzw. bei der zweiten Alternative mit dem AußerEingriff-Bringen der zweiten Reibungskupplung (10) abgewartet wird, bis das Verhältnis zwischen einer Drehzahl der Kupplungseingangswelle (7) und einer Drehzahl der wenigstens einen der ersten Eingangswelle (12), der zweiten Eingangswelle (13) und der Gegenwelle (17) konstant ist.

12. Verfahren nach irgendeinem der vorhergehenden Ansprüche, wobei das InEingriff-Bringen der zweiten Reibungskupplung (10) gemäß der ersten Alternative bzw. das Außer-Eingriff-Bringen der zweiten Reibungskupplung (10) gemäß der zweiten Alternative schrittweise durch Veränderung des Eingriffsniveaus oder durch kontinuierliche Veränderung des Eingriffsniveaus ausgeführt wird.

13. Verfahren nach irgendeinem der vorhergehenden Ansprüche, wobei der Regelparameter einer von einer Reibungskupplungsposition oder einem aufgebrachten Druck einer zugeordneten Kupplungsregeleinrichtung ist.

14. Verfahren nach irgendeinem der vorhergehenden Ansprüche, wobei die erste Steueralternative gewählt wird, wenn eine Kalibrierung eines Eingriffshysteresezweigs (40) der geschätzten Kupplungskennlinie (39) der zweiten Reibungskupplung (10) angefordert wird, und wobei die zweite Steueralternative gewählt wird, wenn eine Kalibrierung eines Außer-Eingriffs-Hysteresezweiges (41) der geschätzten Kupplungskennlinie (39) der zweiten Reibungskupplung (10) angefordert wird.

15. Doppelkupplungskalibriersystem zur Kalibrierung einer geschätzten Kupplungskennlinie (39) einer Doppelkupplungsanordnung (8) eines KraftFahrzeuggetriebes (1), das eine Doppelkupplungsanordnung (8) mit einer ersten Reibungskupplung (9), einer ersten Kupplungsregeleinrichtung, einer zweiten Reibungskupplung (10) und einer zweiten Kupplungsregeleinrichtung, eine erste Eingangswelle (12), die mit der ersten Reibungskupplung (9) verbunden ist, eine zweite Eingangswelle (13), die mit der zweiten Reibungskupplung (10) verbunden ist, wenigstens eine Gegenwelle (17), die parallel zu wenigstens einer der ersten und der zweiten Eingangswelle (12, 13) angeordnet ist, Zahnräder (27, 28, 29), Zahnkupplungen (33, 34), eine Getriebeausgangswelle (35) und eine Steuereinheit umfasst, wobei jede der Reibungskupplungen (9, 10) mit einem Hauptantrieb mittels einer Kupplungseingangswelle (7) antriebsverbunden ist, und wobei unterschiedliche Drehzahlverhältnisse zwischen der Kupplungseingangswelle (7) und der Getriebeausgangswelle (35) durch selektiven Eingriff der Reibungskupplungen (9, 10) und der Zahnkupplungen (33, 34) hergestellt werden können, **dadurch gekennzeichnet,**

- **dass** die erste Eingangswelle (12) über ein bekanntes Übersetzungsverhältnis mit der zweiten Eingangswelle (13) verbunden ist, wobei die Getriebeausgangswelle (35) außer Eingriff mit der Kupplungseingangswelle (7) steht,
- **dass** die Steuereinheit so konfiguriert ist, dass sie
gemäß einer ersten Alternative, einen Regelparameter der ersten Kupplungsregeleinrichtung so steuert, dass die erste Reibungskupplung (9) mit einem ersten Drehmomentübertragungsvermögen in Eingriff steht, dass die zweite Reibungskupplung (10) anfänglich vollständig außer Eingriff steht, und nachfolgend in Eingriff gebracht wird, oder
gemäß einer zweiten Alternative, bei der die zweite Reibungskupplung (10) anfänglich vollständig in Eingriff steht, einen Regelparameter der ersten Kupplungsregeleinrichtung so steuert, dass die erste Reibungskupplung (9) mit einem ersten Drehmomentübertragungsvermögen in Eingriff steht, und dass die zweite Reibungskupplung (10) nachfolgend außer Eingriff gebracht wird,
- **dass** die Steuereinheit so konfiguriert ist, dass sie ein Drehmomentübertragungsvermögen der zweiten Reibungskupplung (10) bei einem bestimmten Regelparameter der zweiten Kupplungsregeleinrichtung berechnet, und

- **dass** die Steuereinheit so konfiguriert ist, dass sie eine geschätzte Kupplungskennlinie (39) der zweiten Reibungskupplung (10) einstellt.

## Revendications

1. Procédé destiné à étalonner une courbe caractéristique d'embrayage estimée (39) d'un ensemble à double embrayage (8) d'une transmission (1) pour un véhicule automobile, dans lequel ladite transmission (1) comprenant un ensemble à double embrayage (8) avec un premier embrayage à friction (9), un premier régulateur d'embrayage, un deuxième embrayage à friction (10), et un deuxième régulateur d'embrayage, un premier arbre d'entrée (12) relié audit premier embrayage à friction (9), un deuxième arbre d'entrée (13) relié audit deuxième embrayage à friction (10), au moins un arbre intermédiaire (17) agencé parallèlement à au moins l'un desdits premier et deuxième arbres d'entrée (12, 13), des roues dentées (27, 28, 29), des embrayages à dents (33, 34), et un arbre de sortie de transmission (35), dans lequel chacun desdits embrayages à friction (9, 10) étant relié en entraînement à un moteur principal au moyen d'un arbre d'entrée d'embrayage (7), et dans lequel différents rapports de vitesse entre ledit arbre d'entrée d'embrayage (7) et ledit arbre de sortie de transmission (35) peuvent être établis par un engagement sélectif desdits embrayages à friction (9, 10) et desdits embrayages à dents (33, 34), **caractérisé en ce que** ledit procédé comprenant les étapes qui consistent :

   - à interconnecter mécaniquement ledit premier arbre d'entrée (12) avec ledit deuxième arbre d'entrée (13) avec un rapport d'engrenage connu, moyennant quoi ledit arbre de sortie de transmission (35) est désengagé dudit arbre d'entrée d'embrayage (7) ;
   - à commander,
   selon une première variante, un paramètre de régulation dudit premier régulateur d'embrayage de sorte que ledit premier embrayage à friction (9) soit engagé avec une première capacité de transmission de couple, que ledit deuxième embrayage à friction (10) soit initialement complètement désengagé, et soit par la suite engagé ;
   ou
   selon une deuxième variante, que ledit deuxième embrayage à friction (10) soit initialement complètement engagé, un paramètre de régulation dudit premier régulateur d'embrayage de sorte que ledit premier embrayage à friction (9) soit engagé avec une première capacité de transmission de couple, et que ledit deuxième embrayage à friction (10) soit par la suite désengagé ;
   - à calculer une capacité de transmission de couple dudit deuxième embrayage à friction (10) à un certain paramètre de régulation dudit deuxième régulateur d'embrayage ; et
   - à ajuster une courbe caractéristique d'embrayage estimée (39) dudit deuxième embrayage à friction (10).

2. Procédé selon la revendication 1, dans lequel ladite capacité de transmission de couple dudit deuxième embrayage à friction (10) à un certain paramètre de régulation dudit deuxième régulateur d'embrayage est calculée sur la base d'au moins ladite première capacité de transmission de couple dudit premier embrayage à friction (9), ledit rapport d'engrenage connu, et ledit paramètre de régulation réel dudit deuxième régulateur d'embrayage au moment où on vérifie qu'un rapport entre une vitesse de rotation dudit arbre d'entrée d'embrayage (7) et une vitesse de rotation d'au moins l'un dudit premier arbre d'entrée (12), desdits deuxièmes arbres d'entrée (13), dudit arbre intermédiaire (17) est modifié lors d'un engagement progressif dudit deuxième embrayage à friction (10) selon ladite première variante, ou lors d'un désengagement progressif dudit deuxième embrayage à friction (10) selon ladite deuxième variante.

3. Procédé selon la revendication 2, dans lequel ladite capacité de transmission de couple dudit deuxième embrayage à friction (10) à un certain paramètre de régulation dudit deuxième régulateur d'embrayage est calculée au moment où on vérifie qu'à la fois un rapport entre une vitesse de rotation dudit arbre d'entrée d'embrayage (7) et une vitesse de rotation dudit premier arbre d'entrée (12), et un rapport entre une vitesse de rotation dudit arbre d'entrée d'embrayage (7) et une vitesse de rotation dudit deuxième arbre d'entrée (13) sont modifiés.

4. Procédé selon la revendication 1, dans lequel ladite capacité de transmission de couple dudit deuxième embrayage à friction (10) à un certain paramètre de régulation dudit deuxième régulateur d'embrayage est calculée sur la base d'au moins un couple de sortie enregistré dudit moteur principal, et ledit rapport d'engrenage connu.

5. Procédé selon la revendication 4, dans lequel la capacité de transmission de couple du deuxième embrayage à friction (9) est calculée sur une plage de paramètres de régulation dudit deuxième régulateur d'embrayage au moyen d'un niveau d'engagement augmentant progressivement du deuxième embrayage à friction (10) selon la première variante de commande, et au moyen d'un niveau d'engagement diminuant progressivement du deuxième embrayage à friction (10) selon la deuxième variante de commande, et l'enregistrement en continu de couple de sortie dudit moteur principal.

6. Procédé selon l'une des revendications 4 ou 5, dans lequel la courbe caractéristique d'embrayage (39) des premier et deuxième embrayages à friction (9, 10) à la fois est étalonnée durant la même séquence d'étalonnage au moyen du calcul en premier lieu de la capacité de transmission de couple du deuxième embrayage à friction (10) sur la base du couple de sortie enregistré dudit moteur principal, et dudit rapport d'engrenage connu, et du calcul par la suite de la capacité de transmission de couple du premier embrayage à friction (9) sur la base d'au moins la capacité de transmission de couple calculée dudit deuxième embrayage à friction (10), ledit rapport d'engrenage connu, et ledit paramètre de régulation réel dudit premier régulateur d'embrayage au moment où on vérifie qu'un rapport entre une vitesse de rotation dudit arbre d'entrée d'embrayage (7) et une vitesse de rotation d'au moins l'un dudit premier arbre d'entrée (12), desdits deuxièmes arbres d'entrée (13), dudit arbre intermédiaire (17) est modifié lors d'un engagement progressif dudit deuxième embrayage à friction (10) selon ladite première variante, ou lors d'un désengagement progressif dudit deuxième embrayage à friction (10) selon ladite deuxième variante.

7. Procédé selon l'une des revendications précédentes, dans lequel lors de la détection selon laquelle ledit rapport entre une vitesse de rotation dudit arbre d'entrée d'embrayage (7) et une vitesse de rotation d'au moins l'un dudit premier arbre d'entrée (12), desdits deuxièmes arbres d'entrée (13), dudit arbre intermédiaire (17) est modifié, vérifiant également une accélération angulaire d'au moins l'un dudit premier arbre d'entrée (12), desdits deuxièmes arbres d'entrée (13), dudit arbre intermédiaire (17), et dans lequel ladite étape qui consiste à calculer une capacité de transmission de couple dudit deuxième embrayage à friction (10) est en outre basée sur ladite accélération angulaire vérifiée, et des moments d'inertie des composants de transmission rotatifs (9, 10, 12, 13, 17, 21, 22, 23, 27, 28, 29, 30, 31, 32, 33, 34) impliqués dans le procédé d'étalonnage.

8. Procédé selon l'une des revendications précédentes, dans lequel ladite étape qui consiste à calculer une capacité de transmission de couple dudit deuxième embrayage à friction (10) est en outre basée sur un couple de traînée de transmission.

9. Procédé selon la revendication 8, dans lequel ledit couple de traînée de transmission est atteint au moyen d'une fonction prédéfinie de couple de traînée de transmission par rapport à une température d'huile de transmission, dans lequel ladite température d'huile de transmission est acquise par au moins un capteur de température d'huile.

10. Procédé selon la revendication 8, dans lequel ledit couple de traînée de transmission est déterminé au moyen des étapes qui consistent :

   - à commander la vitesse de l'arbre d'entrée d'embrayage (42) pour avoir une valeur constante ;
   - à engager l'un desdits premier et deuxième embrayages à friction (9, 10), avec ou sans interconnexion mécanique dudit premier arbre d'entrée (12) avec ledit deuxième arbre d'entrée (13) avec un rapport d'engrenage connu ;
   - à attendre jusqu'à ce que l'arbre d'entrée associé (12, 13) soit en synchronisation avec ledit arbre d'entrée d'embrayage (7) ;
   - à désengager ledit embrayage à friction préalablement engagé (9, 10) ;
   - à enregistrer le retard de vitesse de l'arbre d'entrée ; et
   - à déterminer le couple de traînée de transmission sur la base d'au moins un retard de vitesse de l'arbre d'entrée enregistré et des moments d'inertie des composants de transmission rotatifs (9, 10, 12, 13, 17, 21, 22, 23, 27, 28, 29, 30, 31, 32, 33, 34) impliqués dans le procédé de détermination de couple de traînée de transmission.

11. Procédé selon l'une des revendications précédentes, dans lequel ledit procédé comprenant l'étape qui consiste à attendre avec engagement dudit deuxième embrayage à friction (10) selon ladite première variante, respectivement, le désengagement dudit deuxième embrayage à friction (10) selon ladite deuxième variante, jusqu'à ce que ledit rapport entre une vitesse de rotation dudit arbre d'entrée d'embrayage (7) et une vitesse de rotation d'au moins l'un dudit premier arbre d'entrée (12), desdits deuxièmes arbres d'entrée (13), dudit arbre intermédiaire (17) soit constant.

12. Procédé selon l'une des revendications précédentes, dans lequel ledit engagement dudit deuxième embrayage à friction (10) selon ladite première variante, respectivement le désengagement dudit deuxième embrayage à friction (10) selon ladite deuxième variante est exécuté par un changement progressif de niveau d'engagement, ou par un changement continu de niveau d'engagement.

13. Procédé selon l'une des revendications précédentes, dans lequel ledit paramètre de régulation est l'une ; d'une position d'embrayage à friction ou d'une pression appliquée d'un régulateur d'embrayage associé.

14. Procédé selon l'une des revendications précédentes, dans lequel ladite première variante de commande est sélectionnée si l'étalonnage d'une branche d'hystérésis d'engagement (40) de la courbe caractéristique d'embrayage estimée (39) dudit deuxième embrayage à friction (10) est exigé, et dans lequel ladite deuxième variante de commande est sélectionnée si l'étalonnage d'une branche d'hystérésis de désengagement (41) de la courbe caractéristique d'embrayage estimée (39) dudit deuxième embrayage à friction (10) est exigé.

15. Système d'étalonnage à double embrayage destiné à étalonner une courbe caractéristique d'embrayage estimée (39) d'un ensemble à double embrayage (8) d'une transmission (1) de véhicule automobile, qui comprend un ensemble à double embrayage (8) ayant un premier embrayage à friction (9), un premier régulateur d'embrayage, un deuxième embrayage à friction (10), et un deuxième régulateur d'embrayage, un premier arbre d'entrée (12) relié audit premier embrayage à friction (9), un deuxième arbre d'entrée (13) relié audit deuxième embrayage à friction (10), au moins un arbre intermédiaire (17) agencé parallèlement à au moins l'un desdits premier et deuxième arbres d'entrée (12, 13), des roues dentées (27, 28, 29), des embrayages à dents (33, 34), un arbre de sortie de transmission (35), et une unité de commande, dans lequel chacun desdits embrayages à friction (9, 10) étant relié en entraînement à un moteur principal au moyen d'un arbre d'entrée d'embrayage (7), et dans lequel différents rapports de vitesse entre ledit arbre d'entrée d'embrayage (7) et ledit arbre de sortie de transmission (35) peuvent être établis par un engagement sélectif desdits embrayages à friction (9, 10) et desdits embrayages à dents (33, 34), **caractérisé en ce que** :

- ledit premier arbre d'entrée (12) est interconnecté mécaniquement avec ledit deuxième arbre d'entrée (13) via un rapport d'engrenage connu, où ledit arbre de sortie de transmission (35) est désengagé dudit arbre d'entrée d'embrayage (7) ;
- ladite unité de commande est agencée pour commander,
selon une première variante, un paramètre de régulation dudit premier régulateur d'embrayage de sorte que ledit premier embrayage à friction (9) soit engagé avec une première capacité de transmission de couple, que ledit deuxième embrayage à friction (10) soit initialement complètement désengagé, et soit par la suite engagé ; ou
selon une deuxième variante, que ledit deuxième embrayage à friction (10) soit initialement complètement engagé, un paramètre de régulation dudit premier régulateur d'embrayage de sorte que ledit premier embrayage à friction (9) soit engagé avec une première capacité de transmission de couple, et que ledit deuxième embrayage à friction (10) soit par la suite désengagé ;
- ladite unité de commande est agencée pour calculer une capacité de transmission de couple dudit deuxième embrayage à friction (10) à un certain paramètre de régulation dudit deuxième régulateur d'embrayage ; et **en ce que**
- ladite unité de commande est agencée pour ajuster une courbe caractéristique d'embrayage estimée (39) dudit deuxième embrayage à friction (10).

FIG. 1

FIG. 2

FIG. 3A

FIG. 3B

FIG. 3C

FIG. 4A

FIG. 4B

FIG. 4C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100114443 A1
- DE 10261723 A1